(19) **Europäisches Patentamt**

**European Patent Office**

**Office européen des brevets**

(11) **EP 1 141 673 B1**

(12) **EUROPÄISCHE PATENTSCHRIFT**

(45) Veröffentlichungstag und Bekanntmachung des Hinweises auf die Patenterteilung:
**27.10.2004 Patentblatt 2004/44**

(21) Anmeldenummer: **00904803.4**

(22) Anmeldetag: **04.01.2000**

(51) Int Cl.$^7$: **G01N 13/16**, G01N 19/00

(86) Internationale Anmeldenummer:
**PCT/DE2000/000003**

(87) Internationale Veröffentlichungsnummer:
**WO 2000/040946 (13.07.2000 Gazette 2000/28)**

(54) **VERFAHREN UND VORRICHTUNG ZUR GLEICHZEITIGEN BESTIMMUNG DER ADHÄSION, DER REIBUNG UND WEITERER MATERIALEIGENSCHAFTEN EINER PROBENOBERFLÄCHE**

METHOD AND DEVICE FOR SIMULTANEOUSLY DETERMINING THE ADHESION, FRICTION, AND OTHER MATERIAL PROPERTIES OF A SAMPLE SURFACE

PROCEDE ET DISPOSITIF POUR LA DETERMINATION SIMULTANEE DE L'ADHERENCE, DE LA FRICTION ET D'AUTRES PROPRIETES D'UNE SURFACE D'ECHANTILLON

(84) Benannte Vertragsstaaten:
**AT BE CH CY DE DK ES FI FR GB GR IE IT LI LU MC NL PT SE**

(30) Priorität: **05.01.1999 DE 19900114**

(43) Veröffentlichungstag der Anmeldung:
**10.10.2001 Patentblatt 2001/41**

(73) Patentinhaber: **WITEC Wissenschaftliche Instrumente und Technologie GmbH 89081 Ulm (DE)**

(72) Erfinder:
 • **KROTIL, Hans-Ulrich D-89233 Neu-Ulm (DE)**
 • **STIFTER, Thomas D-89281 Illereichen (DE)**
 • **MARTI, Othmar D-89075 Ulm (DE)**

(74) Vertreter: **Tilger, Bernhard Erbisgasse 3 64646 Heppenheim (DE)**

(56) Entgegenhaltungen:
 **EP-A- 0 896 201          US-A- 5 763 768**

 • **KOLESKE D D ET AL: "DESING AND CALIBRATION OF A SCANNING FORCE MICROSCOPE FOR FRICTION,ADHESION, AND CONTACT POTENTIAL STUDIES" REVIEW OF SCIENTIFIC INSTRUMENTS,US,AMERICAN INSTITUTE OF PHYSICS. NEW YORK, Bd. 66, Nr. 9, 1. September 1995 (1995-09-01), Seiten 4566-4574, XP000528719 ISSN: 0034-6748**
 • **YAMANAKA K ET AL: "LATERAL FORCE MODULATION ATOMIC FORCE MICROSCOPE FOR SELECTIVE IMAGING OF FRICTION FORCES" JAPANESE JOURNAL OF APPLIED PHYSICS,JP,PUBLICATION OFFICE JAPANESE JOURNAL OF APPLIED PHYSICS. TOKYO, Bd. 34, Nr. 5B, PART 01, 1. Mai 1995 (1995-05-01), Seiten 2879-2882, XP000721036 ISSN: 0021-4922 in der Anmeldung erwähnt**

**Beschreibung**

Die vorliegende Erfindung betrifft ein Verfahren zur gleichzeitigen Bestimmung zumindest zweier Materialeigenschaften, umfassend die Oberflächentopographie, die Adhäsion, die statische und dynamische Reibung sowie die Elastizität und Steifigkeit, mittels eines eine Rastersonde umfassenden Rastersondenmikroskops. Die Erfindung betrifft auch ein verbessertes Rastersondenmikroskop zur Durchführung des erfindungsgemäßen Verfahrens.

Die Rastersondenmikroskopie ermöglicht die zerstörungsfreie Charakterisierung von Probenoberflächen auf molekularer bzw. atomarer Skala. Neben der Topographie einer zu untersuchenden Oberfläche können auch noch eine Reihe weiterer Oberflächeneigenschaften, wie zum Beispiel die Reibung, die Adhäsion, die Nachgiebigkeit und andere elastische Eigenschaften bestimmt werden.

Zur Klasse der Rastersondenmikroskope gehören beispielsweise das Rastertunnelmikroskop (STM: Scanning Tunneling Microscope), Nahfeldmikroskope (SNOM: Scanning Near-Field Optical Microscope) und Kraftoder Rasterkraftmikroskope (SFM: Scanning Force Microscope bzw. RKM: Rasterkraftmikroskop).

Bezüglich näherer Informationen zur Rastersondenmikroskopie sei an dieser Stelle auf folgende Veröffentlichung von Binnig et al. verwiesen: Binnig, G.; Quate, C. F. und Gerber, C.: Atomic Force Microscope, Phys. Rev. Lett., 930 - 933, 56 (1986). Die Bestimmung von adhäsiven Kräften erfolgt üblicherweise über eine Messung von Kraft-Distanzkurven mittels eines Rasterkraftmikroskops. Bei einer derartigen Messung wird die Rastersonde, d.h. die Meßspitze des Rasterkraftmikroskops, von einem größeren Abstand aus auf die zu untersuchende Probenoberfläche gefahren und anschließend wieder von ihr wegbewegt, wobei die abstandsabhängigen Kräfte über die Auslenkung eines Balkens oder Cantilevers erfaßt werden, an dem die Rastersonde angebracht ist. Nachteilig an dieser Vorgehensweise ist die recht geringe Meßgeschwindigkeit, die zudem mit einer außerordentlich speicherintensiven Bildaufnahme und einer recht zeitintensiven quantitativen Auswertung verbunden ist. Außerdem sind solche Messungen stark fehlerbehaftet. Da die Kraft-Distanzkurven zeilenweise aufgenommen werden, sind zudem Topographieinformationen nur recht aufwendig zugänglich.

Alternativ hierzu können adhäsive Kräfte auch durch eine Messung im sogenannten Pulse Force Mode (PFM) bestimmt werden. Bei diesem Meßverfahren wird die Oberfläche einer zu untersuchenden Probe in einer Art Kontaktmodus periodisch mit Frequenzen im Kiloherzbereich , vorzugsweise 0,1-3 kHz, abgetastet. Durch diese Vorgehensweise lassen sich neben der Topographie gleichzeitig auch noch bestimmte Probeneigenschaften ermitteln, wie zum Beispiel die lokale elastische Steifigkeit und die Adhäsion. Die Adhäsionswerte werden online gemessen. Die Messung der Adhäsion mittels der Pulsed-Force-Mode Technik besitzt jedoch den Nachteil, daß die Meßgeschwindigkeit an die vertikale Modulationsfrequenz angepaßt werden muß und insoweit einer Einschränkung unterliegt. Bei einer Modulationsfrequenz von 1 kHz und einer Bildauflösung von 256 Pixel ergibt sich beispielsweise eine minimale Meßgeschwindigkeit pro Zeile von 0,256 s, um für jedes Bildpixel durch einen Kontakt zwischen der Rastersonde und der Probe einen neuen Meßwert zu bekommen.

Bezüglich näherer Informationen zum Pulsed-Force-Mode sei an dieser Stelle auf folgende Veröffentlichungen verwiesen: S. Hild, A. Roa, G. Volswinkler und O. Marti: "Pulsed Force Mode - a new method for the simultaneous imaging of mechanical and chemical surface properties", Bull. Mic. Soc. Can., 26, 24 (1998) und A. Rosa, E. Weilandt, O. Marti und S. Hild: "The simultaneous measurements of elastic, electrostatic and adhesive properties by scanning force microscopy: pulsed-force mode operation". Meas. Sci. Technol., 8, 1333 - 1338 (1997).

Neben der Messung von Adhäsionskräften können mit Hilfe der Kraftmikroskopie auch Reibungsmessungen durchgeführt werden. Die Reibungsmessungen erfolgen üblicherweise im Kontaktmodus (SFFM: Scanning Friction Force Microscopy), wobei die laterale Tordierung des Federbalkens oder Cantilevers erfaßt und als Maß für die lokale Reibung verwendet wird. Diese konventionelle Art der Reibungsmessung leidet unter einer geringen Reproduzierbarkeit der Meßergebnisse. Da in den erfaßten Reibungssignalen auch Topographieeffekte enthalten sind, erhält man zudem keine qualitativen on-line-Ergebnisse. Zum Ausmitteln der unerwünschten Topgraphieeffekte ist vor allem bei nichtlinearisierten Scanpiezoelementen eine zeitaufwendige Bildbearbeitung erforderlich, um Hin- und Rückscanbilder zur Deckung zu bringen. Die erhaltenen Ergebnisse können zudem nicht unmittelbar in die darauffolgenden Messungen einfließen. Ferner gibt es bisher keine einheitlichen Kalibrierungsstandards zur quantitativen Bestimmung der Reibungskontraste. Mit dem SFFM-Verfahren ist außerdem nur die Gleitreibung meßbar, so daß es keine Aussage über die Haftreibung ermöglicht. Zur exakten Bestimmung der Gleitreibung in Abhängigkeit von der Normalkraft ist eine Meßreihe mit variierenden Normalkräften notwendig. Zudem ist auch eine eventuelle Veränderung oder Beschädigung von weichen scherkraftempfindlichen Proben möglich. Ein Mitschleppen von Probenverunreinigungen kann zu falschen Reibungskontrasten führen. Ferner sind auch klebrige Probensysteme nicht meßbar.

Weitere Informationen zur konventionellen Reibungskraftmikroskopie können beispielsweise den folgenden Veröffentlichungen entnommen werden: Mate, C.M.; McCelland, G.M.; Erlandson, R.; Chiang S.: Atomic-Scale Friction of a Tungsten tip on a Graphite surface, Phys. Rev. Lett., 59, (1987), 1942; Marti, O.;

Colchero, J.; Mylnek, J.: Combined scanning force and friction microscopy of mica, Nanotechnology, 1, (1990), 141-144; Meyer, G.; Amer, N.M.: Simultaneous measurement of lateral and normal forces with an optical-beam-deflection atomic force microscope, Appl. Phys. Lett., (1990), 2098.

Bei einem relativ neuen Verfahren zur Bestimmung der Reibung mittels eines Rastersondenmikroskops wird die zu untersuchende Probe zusätzlich zu einer konventionellen Reibungsmessung im Kontaktmodus (SFFM) mittels eines Scherpiezoelements lateral im 10 kHz-Bereich periodisch senkrecht zur langsamen Scanrichtung moduliert, wobei die Tordierung des Federbalkens im Kontaktmodus mittels der Lock-In-Technik aufgenommen und aus den Meßergebnissen die Haftund Gleitreibung bestimmt wird. Neben der Topographie können auch noch weitere mechanische Eigenschaften, wie das elastische Verhalten, die (Scher-) Steifigkeit und bestimmte Relaxationszeiten bestimmt werden. Zur exakten Bestimmung der Haft- und Gleitreibung in Abhängigkeit von der Normalkraft ist jedoch eine Meßreihe mit variierenden Normalkräften notwendig. Zudem ist eine eventuelle Veränderung oder Beschädigung von weichen scherkraftempfindlichen Proben möglich. Ferner kann ein Mitschleppen von Probenverunreinigungen zu falschen Reibungskontakten führen. Außerdem sind auch hiermit klebrige Probensysteme nicht oder nur sehr schwer meßbar.

Nähere Informationen zu dieser dynamischen Reibungskraftmikroskopie können beispielsweise den folgenden beiden Literaturstellen entnommen werden: Yamanaka, K. und Tomita, E.: Lateral force modulation atomic force microscope for selective imaging of friction forces, Japanese Journal of Applied Physics, Part 1 (Regular Papers & Short Notes), Band 34, Nr. 5B, Seiten 2879 - 2882, (Mai 1995); Yamanaka, K.; Takano, H.; Tomita, E. und Fujihira, M.: Lateral force modulation atomic force microscopy of Langmuir-Blodgett film in water, Japanese Journal of Applied Physics, Part 1 (Regular Papers, Short Notes & Review Papers), Band 35, Nr. 10, Seiten 5421 - 5425, (Oktober 1996).

Der Vollständigkeit halber sei auch noch auf die nachveröffentlichte EP 0 896 201 A1 verwiesen, die ein Rastersondenmikroskop offenbart, das zusätzlich zu einer Rastersonde noch eine separate Detektorsonde zur Erfassung der Rastersondenauslenkung und zur Steuerung des Rastersondenabstandes bezüglich einer zu untersuchenden Probenoberfläche umfaßt. Hierbei wird die Abstandsabhängigkeit des Resonanzverhaltens der Detektorsonde bei einer Schwingungsanregung der Detektorsonde und/oder der Rastersonde mittels einer zugeordneten piezoelektrischen Schwingungseinrichtung ausgenutzt.

Ein Rastersondenmikroskop gemäß dem Oberbegriff des Anspruchs 1 ist aus der Veröffentlichung "Design and calibration of a scanning force microscope for friction, adhesion, and contact potential studies" von Koleske et al. (Rev. Sci. Instrum., American Institute of Physics, New York (01-09-1995), 66(9), 4566-4574) bekannt.

Eine ortsaufgelöste simultane Messung der Adhäsionskräfte und der Reibungskräfte und (weiterer mechanischer Probeneigenschaften) an der Oberfläche einer zu untersuchenden Probe ermöglicht jedoch keines der aus dem Stand der Technik bekannten Meßverfahren. Mit einer einzelnen herkömmlichen Rasterkraftmikroskopie-Messung kann entweder die Adhäsion oder die Reibung der zu untersuchenden Probe ermittelt werden. Die Bestimmung dieser beiden Größen durch eine einzige Messung mit einem Rasterkraftmikroskop ist bisher technisch noch nicht möglich.

Die Aufgabe der vorlegenden Erfindung besteht daher in der Schaffung eines verbesserten Rastersonden-Meßverfahrens, mit dem sich zumindest die Adhäsion und die Reibung gleichzeitig messen lassen. Die genannten Größen sollen hierbei nach Möglichkeit, sei es allein oder gemeinsam, auch noch mit anderen interessierenden Eigenschaften, wie z.B. bestimmte elastische Konstanten, umfassend die Adhäsion und die Steifigkeit, und/oder der Topographie, gleichzeitig meßbar sein, wobei der Ausdruck Materialeigenschaften im Rahmen der vorliegenden Beschreibung auch optische Signale einer zu untersuchenden Probe, sowie magnetische oder elektrische Kräfte, Informationen über die Temperaturverteilung und gegebenenfalls auch weitere Meßgrößen umfassen kann. Die Aufgabe besteht zudem in der Schaffung eines geeigneten Rastersondenmikroskops zur Durchführung eines solchen Meßverfahrens.

Diese Aufgabe wird erfindungsgemäß durch ein Verfahren gelöst, bei dem die Rastersonde eines Rastersondenmikroskops und/oder die Probe mit der zu untersuchenden Probenoberfläche in vertikaler und/oder horizontaler Richtung so verfahren wird, daß die Rastersonde an einer zu untersuchenden vorbestimmten Stelle der Probenoberfläche auf bestimmte Art und Weise mit der Probenoberfläche wechselwirkt. Die Rastersonde wird hierbei vorzugsweise mit einer bestimmten Normalkraft mit der Probenoberfläche in Kontakt gebracht. Die Rastersonde und/oder die Probe werden einer vertikalen Schwingung unterworfen und es wird ein die vertikale und/oder laterale Deformation der Rastersonde charakterisierendes erstes Meßsignal aufgenommen. Zudem wird ein die Deformation der Rastersonde charaktersierendes zweites Meßsignal aufgenommen, wobei die Rastersonde und/oder die Probe einer horizontalen und/oder vertikalen Schwingung unterworfen wird. Die beiden Meßsignale werden anschließend zur Bestimmung der gewünschten Probeneigenschaften ausgewertet. Das erste Meßsignal dient hierbei zur Bestimmung der Adhäsion, während aus dem zweiten Meßsignal auf die nachstehend noch beschriebene Art und Weise die Reibung ermittelt wird. Um eine vollständige Information über den zu untersuchenden Bereich der Probenoberfläche zu erhalten, wird die Rastersonde und/oder die Probe erneut verfahren, um die Rastersonde an der nächsten zu untersuchenden Stelle auf die oben beschriebene Art und Weise mit der Probenoberfläche in Kontakt zu bringen, an der der zuvor beschriebene Meßvorgang wiederholt wird. Auf diese Art und Weise wird der gesamte zu untersuchende Oberflächenbereich zeilenweise abgetastet, so wie dies bei Fachleuten auf diesem Gebiet bekannt ist.

Hierdurch erhält man nicht nur ein topographisches Abbild der Probe, sondern es ist erstmals auch möglich, mit ein und derselben Messung lokal die Reibung, die Adhäsion und bestimmte elastische Eigenschaften einer Probe auf molekularer Ebene bis hinunter auf die atomare Ebene zu bestimmen. Die Reibung kann hierbei in Abhängigkeit von verschiedenen Normalkräften gleichzeitig bestimmt werden, so daß Meßreihen mit variierenden Normalkräften auf eine einzige Messung reduziert werden. Dies ist nicht nur mit einer deutlich geringeren Probenbelastung durch das Abrastern verbunden, sondern ermöglicht auf Grund der zeitlich gleichen Umgebungsbedingungen (Temperatur, Luftfeuchtigkeit, usw., Probenaltern) auch eine bessere Vergleichbarkeit der ermittelten Reibungswerte. Durch ein Variieren der Normalkraft ist die Kontrolle bzw. Bestimmung der kritischen Normalkraft, ab der die Probe bei der Reibungsmessung verändert oder zerstört wird, möglich. Zudem ist auch die eventuell unterschiedliche Abhängigkeit der Reibung von der Adhäsion beim Annähern oder Wegziehen des Federbalkens oder Cantilevers experimentell zugänglich. Durch das erfindungsgemäße Verfahren können auch Probensysteme, wie z.B. stark adhäsive oder klebrige Polymersysteme, die im Kontaktmodus nicht abgerastet werden können und somit einer herkömmlichen normalen oder dynamischen Reibungsmessung nicht oder nur schwer zugänglich sind, durch die sensible Abtastung des Pulsed-Force-Mode auf Reibung untersucht werden. Durch die punktuelle Abrasterung wird zudem auch das Mitschleifen von Schmutz weitgehend vermieden, so daß falsche Reibungskontraste durch eine Wechselwirkung zwischen der Rastersonde und dem Schmutz minimiert werden.

Bei dem erfindungsgemäßen Meßverfahren wird die Rastersonde und/oder die Probe vorzugsweise zumindest einer periodischen Schwingung unterworfen, wobei die Schwingungs- oder Modulationsrichtung insbesondere senkrecht oder parallel zur Abtast- oder Scanrichtung gewählt wird. Es sei jedoch darauf hingewiesen, daß auch beliebige Schwingungsrichtungen denkbar sind. Zur Bestimmung der dynamischen Reibung wird hierbei üblicherweise lateral parallel zur schnellen Scanrichtung moduliert, was zu einer Verbiegung und Torsion des Cantilevers führt. Die Modulation kann jedoch auch parallel zur langsamen Scanrichtung erfolgen, was eine Biegeschwingung des Cantilevers bewirkt. Zudem kann analog zur Bestimmung der dynamischen Reibung auch eine vertikale Probenmodulation, d.h. parallel zur Pulsed-Force-Mode-Modulation, durchgeführt werden, wobei beispielsweise über einen Lock-In-Verstärker die vertikale Deformation der Rastersonde ausgewertet wird (Amplitude und Phasenverschiebung). Hierdurch sind Aussagen über das mechanische Verhalten der Probe, insbesondere über deren Elastizität und Steifigkeit möglich.

Die Rastersonde und/oder der Probe wird in vertikaler Richtung vorteilhafterweise mit einer Frequenz von zumindest 10 Hz und einer Amplitude von zumindest 1 nm angeregt, wobei der bevorzugte Frequenzund Amplitudenbereich 500 Hz - 2 kHz bzw. 10 - 500 nm beträgt.

Der vertikalen Schwingung der Probe und/oder der Sonde wird vorzugsweise zumindest eine zweite Schwingung mit einer Frequenz von zumindest 1 kHz und einer Amplitude von zumindest 0,1 nm, insbesondere jedoch mit einer Frequenz von 5 kHz - 1 Mhz und einer Amplitude von 1 - 10 nm überlagert.

Es wird vorteilhafterweise eine horizontale Schwingung mit einer Frequenz von zumindest 500 Hz, insbesondere jedoch 10 - 100 kHz, und einer Amplitude von zumindest 0,1 nm, insbesondere jedoch 1 - 30 nm, verwendet.

Bei einem bevorzugten Ausführungsbeispiel wird das zweite Meßsignal auf die nachstehend noch ausführlich beschriebene Art und Weise mittels eines Lock-In-Verstärkers ausgewertet, von dem über eine Fourier-Transformation des Meßsignals die Reibungsamplitude und die Phase bestimmt wird. Als Rastersonde wird insbesondere die Spitze eines Kraftmikroskops und/oder eines optischen Nahfeldmikroskops mit dem auch optische Signale einer zu untersuchenden Probe erfaßt werden können verwendet, wobei die Spitze des Kraftmikroskops und die Spitze des optischen Nahfeldmikroskops auch in einer gemeinsamen Rastersonde integriert sein können.

Ein zur Durchführung dieses erfindungsgemäßen Verfahrens geeignetes Rastersondenmikroskop mit den im Oberbegriff des Anspruchs 1 angegebenen Merkmalen umfaßt erfindungsgemäß zusätzlich noch eine Einrichtung zum vertikalen und/oder horizontalen Verfahren der Probe, eine Einrichtung zur Erfassung der Probenbewegung und eine Einrichtung zur Erfassung der vertikalen und/oder lateralen Deformation der Rastersonde. Die Einrichtungen zum Verfahren der Rastersonde bzw. der Probe sind hierbei so gestaltet, daß die Rastersonde und die Probenoberfläche durch sie so in Kontakt bringbar sind oder in Kontakt gebracht werden, daß sie auf bestimmte Art und Weise miteinander wechselwirken, was insbesondere einen Kontakt mit einer bestimmten Normalkraft umfaßt.

In einer bevorzugten Ausführungsform umfassen die Einrichtungen zum Verfahren der Rastersonde bzw. der Probe zumindest ein Piezoelement, wobei vorzugsweise für jede dieser Einrichtungen zumindest ein Piezoelement vorgesehen ist.

Die Einrichtungen zum Verfahren der Rastersonde bzw. der Probe, insbesondere die genannten Piezoelemente, werden vorzugsweise periodisch angeregt bzw. moduliert, wobei die Art der Anregung oder Modulation bereits der obigen Beschreibung des erfindungsgemäßen Verfahrens zu entnehmen ist.

Die Einrichtung zur Erfassung der vertikalen und/oder lateralen Deformation der Rastersonde kann in einer bevorzugten konstruktiven Ausgestaltung einen beispielsweise durch eine entsprechende Beschichtung auf die Rastersonde angebrachten Spiegel umfassen, der zur Ablenkung eines einfallenden Laserstrahls bestimmt ist, wobei die sich ergebende Ablenkung als Maß für die vorhandene Deformation der Rastersonde dient. Entsprechende Informationen können jedoch beispielsweise auch kapazitiv, interferometrisch oder piezoelektrisch gewonnnen werden.

Das erfindungsgemäße Rastersondenmikroskop umfaßt vorzugsweise eine Auswerteeinrichtung zur gleichzeitigen Bestimmung zumindest zweier Materialeigenschaften, umfassend die Adhäsion, die statische und dynamische Reibung, die Oberflächentopographie sowie die Elastizität und Steifigkeit, durch Auswertung der erfaßten Deformation der Rastersonde. Diese Auswerteeinrichtung kann insbesondere einen Lock-In-Verstärker und einen Mikrocomputer zur Auswertung der Lock-In-Signale umfassen.

Die Rastersonde des erfindungsgemäßen Rastersondenmikroskops ist vorzugsweise die Spitze eines Kraftmikroskops und/oder eines optischen Nahfeldmikroskops, wobei die Spitze des Kraftmikroskops und die Spitze des optischen Nahfeldmikroskops auch in einer gemeinsamen Rastersonde integriert sein können.

Weitere Merkmale und Vorteile des erfindungsgemäßen Verfahrens und des erfindungsgemäßen Rastersondenmikroskops zur Durchführung dieses Verfahrens ergeben sich nicht nur aus den zugehörigen Ansprüchen - für sich und/oder in Kombination - sondern auch aus der nachfolgenden Beschreibung bevorzugter Ausführungsbeispiele in Verbindung mit den zugehörigen Zeichnungen. In den Zeichnungen zeigen:

Fig. 1      den prinzipiellen Aufbau eines erfindungsgemäßen Rastersondenmikroskops;

Fig. 2      das für die Ableitung der Kräfte zugrundegelegte Koordinatensystem;

Fig. 3A      die Balkenverbiegung bei vertikaler Annäherung an eine zu untersuchende Probenoberfläche;

Fig. 3B      die Balkenverbiegung bei Verfahren der zu untersuchenden Probenoberfläche relativ zu Kraftfeldspitze;

Fig. 4A - 4H      das Prinzip einer Kombination Pulsed-Force-Mode/Dynamische Reibung;

Fig. 5      in schematischer Darstellung die zeitliche Abhängigkeit eines Meßsignals f (t) zur Veranschaulichung einer dynamischen Reibungsmessung;

Fig. 6      ein Ablaufdiagramm für eine erfindungsgemäße Messung für die Kombination Pulsed-Force-Mode/Dynamische Reibung gemäß Fig. 4;

Fig. 7A - 7H      das Prinzip einer Kombination Pulsed-Force-Mode/Force Modulation;

Fig. 8      ein Ablaufdiagramm für eine erfindungsgemäße Messung für die Kombination Pulsed-Force-Mode/Force Modulation gemäß Fig. 7;

Fig. 9A - 9B      theoretisch berechnete Reibungsamplituden- und Phasenabhängigkeiten des Cantilevers von den Modulationsamplituden $A_M$ eines Anregungsscherpiezoelements;

Fig. 10      Meßsignale des neuartigen Rastersondenmikroskops aufgrund einer lateralen und vertikalen Verbiegung des Cantilevers (Kombination Pulsed Force Mode/Dynamische Reibung);

Fig. 11      Meßsignale des neuartigen Rastersondenmikroskops aufgrund einer vertikalen Verbiegung des Cantilevers (Kombination Pulsed Force Mode/Force Modulation);

Fig. 12A - 12D      eine Abbildung der Topographie, der Adhäsion und der Reibung auf einer Probenoberfläche, untersucht mit einem erfindungsgemäßen Rastersondenmikroskop für eine Kombination Pulsed Force Mode/Dynamische Reibung; und

Fig. 13A - 13D      eine Abbildung der Topographie, der Adhäsion, der Reibung auf einer Probenoberfläche, untersucht mit einem erfindungsgemäßen Rastersondenmikroskop für eine Kombination Pulsed Force Mode/Force Modulation.

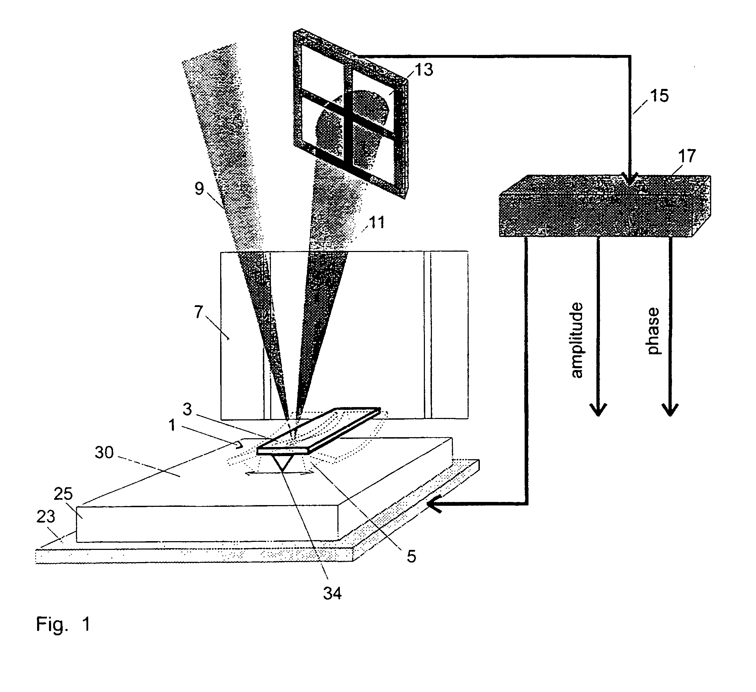

Das in Fig. 1 dargestellte Rastersondenmikroskop umfaßt eine Rastersonde 1 mit einem Balken oder Cantilever 3 und einer Meßspitze 5. Die Meßspitze 5 kann beispielsweise aus Silizum oder Siliziumnitrid, beispielsweise $Si_3N_4$, hergestellt sein. Die vertikale Verschiebung der Rastersonde 1 wird mit Hilfe eines Piezoelements 7 vorgenommen. Die Messung der Deformation des Balkens 3, die beim vertikalen Verfahren ein Maß für die Adhäsionskräfte ist, wird mittels eines nicht näher dargestellten Laseraufbaus ermittelt. Hierfür wird das Licht 9 einer nicht dargestellten Laserlichtquelle auf den Balken 3 projiziert, von dem es so reflektiert wird, daß der reflektierte Strahl 11 auf eine Meßeinrichtung 13 trifft, die beispielsweise die lichtempfindliche Schicht einer segmentierten Photodiode umfassen kann.

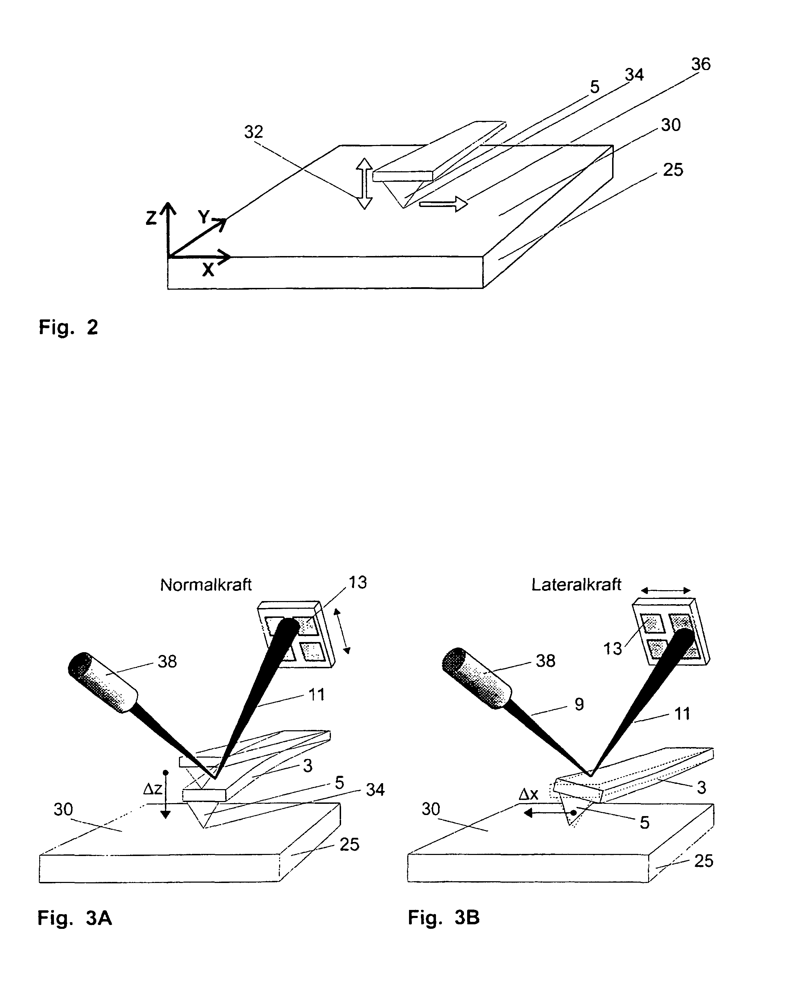

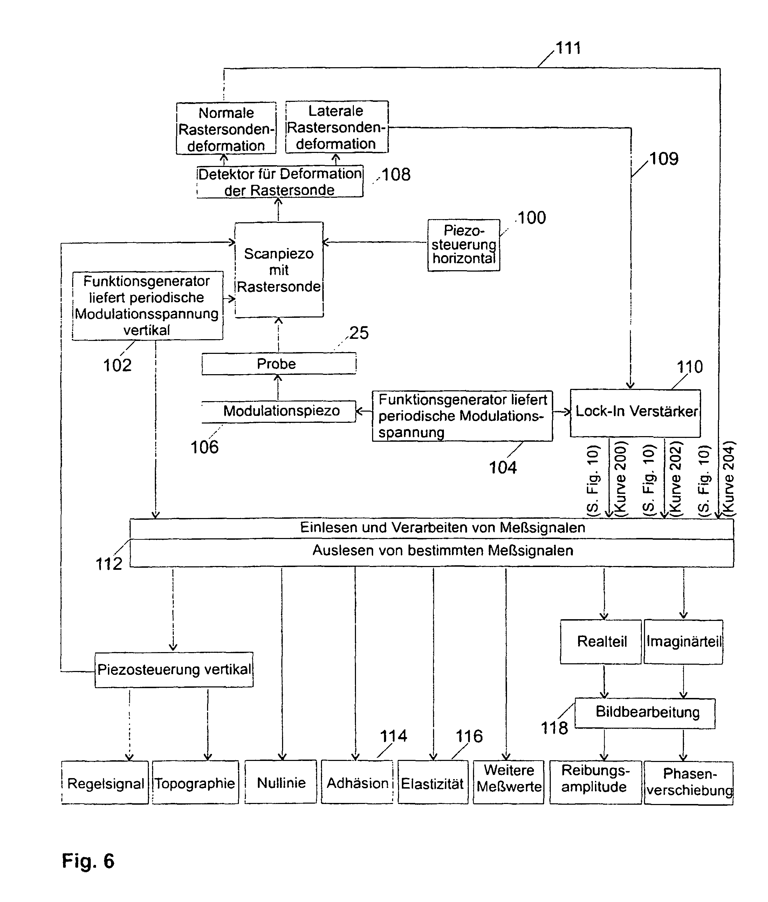

Je nach Stellung des Balkens 3 wird der Lichtstrahl 11 aus der eingezeichneten Null-Position nach oben oder unten bzw. links oder rechts abgelenkt und durch die lichtempfindliche Schicht der Meßeinrichtung 13 in ein elektrisches Signal umgewandelt. Das sich bei einer in horizontalen Richtung erfolgenden Relativbewegung zwischen dem Balken 3 bzw. der Meßspitze 5 und der Probenoberfläche 30 ergebende elektrische Meßsignal, das gemäß Fig. 3B durch eine im wesentlichen seitlich erfolgende Ablenkung des reflektierten Lichtstrahls 11 erzeugt und nachstehend als zweites Meßsignal bezeichnet wird, wird über eine Leitung 15 an einen Lock-In-Verstärker 17 übermittelt, in dem eine Fourier-Transformation durchgeführt und der Realteil und der Imaginärteil des Signals bestimmt wird, aus denen auf die nachstehend noch beschriebene Art und Weise die gewünschte Reibung ermittelt werden kann. Das sich bei einer vertikalen Relativbewegung zwischen der Meßspitze 5 und der Probenoberfläche 30 ergebende elektrische Meßsignal (das sogenannte erste Meßsignal, bei dem der reflektierte Lichtstrahl gemäß Fig. 3A im wesentlichen noch oben oder unten abgelenkt wird), wird zur Bestimmung der Adhäsion über eine nicht dargestellte Leitung direkt an eine ebenfalls nicht dargestellte Auswerteeinrichtung 112 (siehe Fig. 6) übermittelt.

Es sei bemerkt, daß die Erfassung der Deformation des Balkens 3 durch ein Lichtzeigeprinzip der dargestellten Art nur eine mögliche Detektionsart ist, und daß für Fachleute auf diesem Gebiet prinzipiell auch andere Detektionsmöglichkeiten, wie z. B. kapazitive, interferometrische oder piezoelektrische Dektektionsmöglichkeiten, denkbar sind.

Neben der vertikalen Verfahrbarkeit ist am Probentisch 23, der die Probe 25 trägt, erfindungsgemäß ein (nicht dargestelltes) Piezoelement angeordnet, mit dem der Probentisch 23 und damit auch die Probe 25, wie oben bereits erwähnt wurde, zur Ermittlung der statischen und dynamischen Reibung auch lateral verfahren oder angeregt werden kann. Der Meßbalken 3 der Kraftspitze 5 wird bei einer derartigen Messung, wie gestrichen dargestellt, tordiert und/oder verbogen, wobei die auftretende Torsion und/oder Verbiegung ein Maß für die vorhandenen Reibungskräfte ist.

In Fig. 2 ist nochmals das Koordinatensystem verdeutlicht. Dargestellt ist die Meßspitze 5, die bezüglich der Oberfläche 30 verfahren wird. Ein An- und Abheben der Meßspitze 5 und/oder der Probe 25 in Z-Richtung, wie mit dem Pfeil 32 angedeutet, ermöglicht die Adhäsionsmessung an der Stelle 34, ein Verfahren oder Anregen in der Ebene der Probenoberfläche 30 entlang des Pfeils 36 die Messung der statischen und dynamischen Reibung an der eingezeichneten Stelle 34.

In den Figuren 3A und 3B sind die sich ergebenden Meßsignale noch einmal näher dargestellt. Beim vertikalen Verfahren in Z-Richtung zur Messung der Adhäsion wird der Balken 3 gemäß Fig. 3A in Z-Richtung verbogen. Der von einem Laser 36 kommende Lichtstrahl wird von dem Balken 3 reflektiert und auf der Meßeinrichtung oder Meßsonde 13 im wesentlichen nach oben oder unten abgelenkt, wobei die sich ergebende Ablenkung ein Maß für die Adhäsionskraft ist. In Fig. 3B ist das Meßsignal für eine Reibungsmessung dargestellt, bei der die Rastersonde 1 und die Probe 25 bei einer vertikalen Relativbewegung unterworfen werden. Wiederum wird der Lichtstrahl 9 des Lasers 38 auf den Balken 3 gelenkt und von diesem auf der Meßfläche 13 im wesentlichen nach links oder rechts abgelenkt. Da der Balken 3 durch die Reibung der Meßspitze auf der Oberfläche 30 tordiert und/oder verbogen wird, ist die sich ergebende Ablenkung ein Maß für die Reibungskraft.

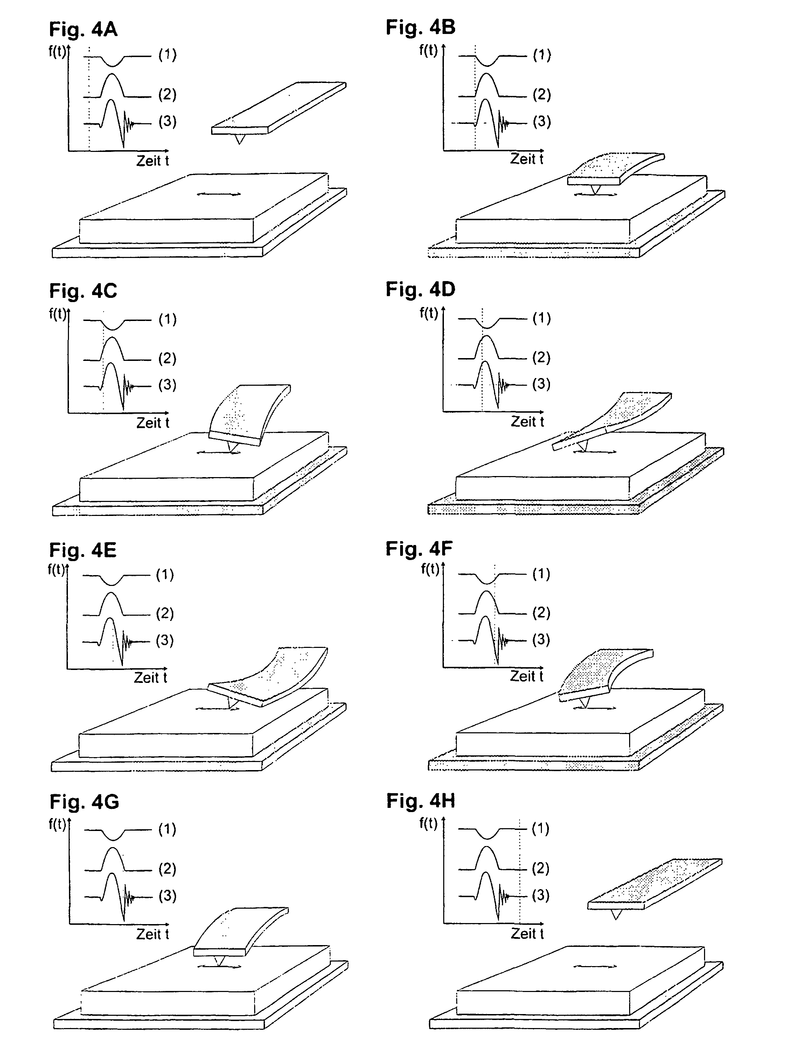

Die Figuren 4A - 4H zeigen anhand einer Darstellung der verschiedenen Balken- oder Cantileverdeformationen während einer Periode zur Erfassung der lokalen Materialeigenschaften an einer bestimmten Probenstelle das Prinzip einer Kombination Pulsed-Force-Mode/dynamische Reibung, wobei zur besseren Übersichtlichkeit nur in Fig. 4A Bezugszeichen angegeben sind. Die in den einzelnen Figuren dargestellten Diagramme zeigen hierbei die zeitliche Abhängigkeit der erfaßten Meßsignale, wobei die Kurven 1 und 2 dem Realteil x bzw. dem Imaginärteil y des oben bereits erwähnten zweiten Meßsignals auf Grund der lateralen Cantileverdeformation entsprechen, während die Kurve 3 ein typisches Pulsed-Force-Mode-Kraftsignal (erstes Meßsignal) zeigt.

In Fig. 4A ist die Rastersonde 1 noch so weit von der zu untersuchenden Probe 25 entfernt, daß noch keine Wechselwirkung zwischen der Rastersonde 1 und der Probe 25 vorhanden ist. Die erfaßten Meßsignale sind zu diesem Zeitpunkt daher gleich Null.

Bei der in Fig. 4B dargestellten weiteren Annäherung der Rastersonde 1 an die Probe 25 gerät die Rastersonde 1 bzw. die Meßspitze 5 auf Grund der negativen (attraktiven) Kraft zwischen der Rastersonde 1 und der Probe 25 in Kontakt mit der Probenoberfläche 30. Dies führt zu einem Anschnappeak in dem in Kurve 3 dargestellten Pulsed-Force-Meßsignal (erstes Meßsignal).

Die Rastersonde 1 wird weiter auf die Probe 25 gedrückt, was gemäß Fig. 4C zu einem Anstieg des ersten Meßsignals (Kurve 3) führt. Gleichzeitig wird die Rastersonde 1 auf Grund der horizontalen Modulation horizontal deformiert. Dies führt zur Detektion eines zweiten Meßsignals, das in Realteil und Imaginärteil aufgegliedert dargestellt ist (Kurve 1 bzw. 2).

Die Fig. 4D veranschaulicht, wie die Rastersonde 1 auf die Probe 25 gedrückt wird, bis eine bestimmte Normalkraft, auf die geregelt wird, erreicht ist. Die positive repulsive Kraft erreicht einen maximalen Wert, so daß sowohl das erste Meßsignal (Kurve 3) als auch das zweite Meßsignal (Kurven 1 und 2) einen maximalen Wert annehmen.

In Fig. 4E wird die Rastersonde 1 wieder von der Probe 25 zurückgezogen, so daß die detektierten Meßsignale kleiner werden.

Bei einem weiteren Zurückziehen der Rastersonde 1 von der Probenoberfläche 30 werden die Meß- bzw. Kraftsignale noch kleiner (siehe Fig. 4F) und man gerät wieder in den attraktiven Bereich auf Grund der adhäsiven Wechselwirkung zwischen der Meßspitze 5 und der Probe 25.

Figur 4G veranschaulicht, wie die Meßspitze 5 noch an der Probe 25 kleben bleibt und wie die zur Trennung der Meßspitze 5 von der Probe 25 benötigte negative Kraft, die hier als Adhäsionskraft bezeichnet wird, maximal wird.

Bei einem weiteren Wegziehen der Meßspitze 5 von der Probenoberfläche 30 gerät die Meßspitze 5 schließlich außer Kontakt mit der Probenoberfläche 30 und schwingt aus, was sich durch ein Ausschwingen im Pulsed-Force-Mode-Meßsignal 3 bemerkbar macht (siehe Fig. 4H). Eine neue Periode beginnt.

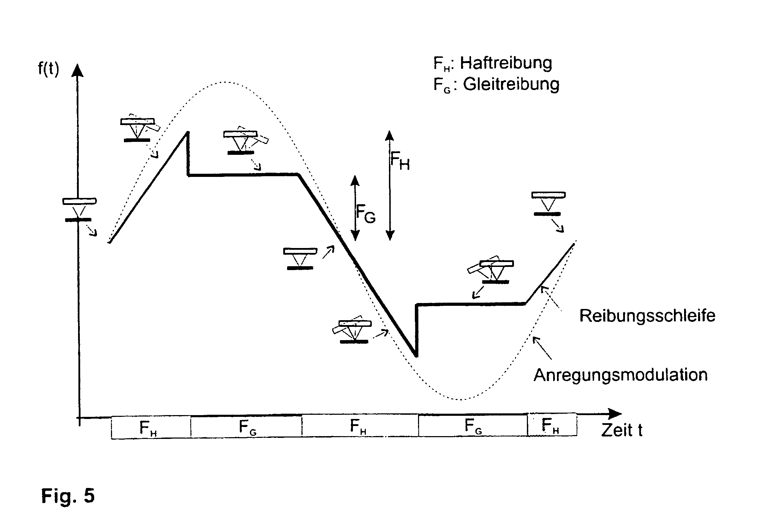

Fig. 5 veranschaulicht das Prinzip einer dynamischen Reibungsmessung. In jeder Modulationsperiode wird eine komplette Reibungsschleife ausgeführt. Bei einer gewissen Auslenkung kann die Meßspitze 5 des Kraftmikroskops der Anregungsmodulation folgen, man befindet sich im Haftreibungsbereich. Bei einer weiteren Erhöhung der Modulationsamplitude kann die Meßspitze 5 des Kraftmikroskops der Auslenkung nicht mehr folgen und es setzt Gleitreibung ein, die detektierte Amplitude wird kleiner.

Die Figur 6 zeigt ein Verfahrensdiagramm für die in Fig. 4 bereits dargestellte Kombination aus Pulsed-Force-Mode und dynamische Reibung, die eine gleichzeitige Messung der Adhäsion und Reibung bzw. Elastizität ermöglicht. Zunächst wird die Rastersonde 1 mit Hilfe einer Steuerungseinrichtung 100 an eine vorbestimmte Probenstelle X, Y verfahren. Sodann wird mit Hilfe eines Funktionsgenerators 102 eine periodische Modulationsspannung generiert, die eine periodische vertikale Bewegung der Rastersonde 1 mit einer Frequenz von zumindest 10 Hz, insbesondere jedoch 500 Hz - 2 kHz, und einer Amplitude von zumindest 1 nm, insbesondere jedoch 10 - 500 nm, zur Folge hat. Zusätzlich zur vertikal-periodischen Bewegung wird mit Hilfe eines Funktionsgenerators 104 die Probe 25 periodisch lateral verfahren, wobei die Frequenz zumindest 500 Hz, insbesondere 10 - 100 kHz, und die Amplitude zumindest 0,1 nm, insbesondere jedoch 1 - 30 nm beträgt. Hierfür wird ein Modulationspiezoelement 106 verwendet. Die oben bereits dargestellte Detektoreinrichtung 108, die sowohl die vertikale Deformation wie die Tordierung und/oder Verbiegung der Rastersonde 1 erfaßt, liefert über eine Leitung 109 an einen Lock-In-Verstärker 110 das oben beschriebene zweite Meßsignal, das einer Fourier-Transformation unterworfen und in Realteil x und Imaginärteil y der Deformation der Rastersonde aufgespalten wird.

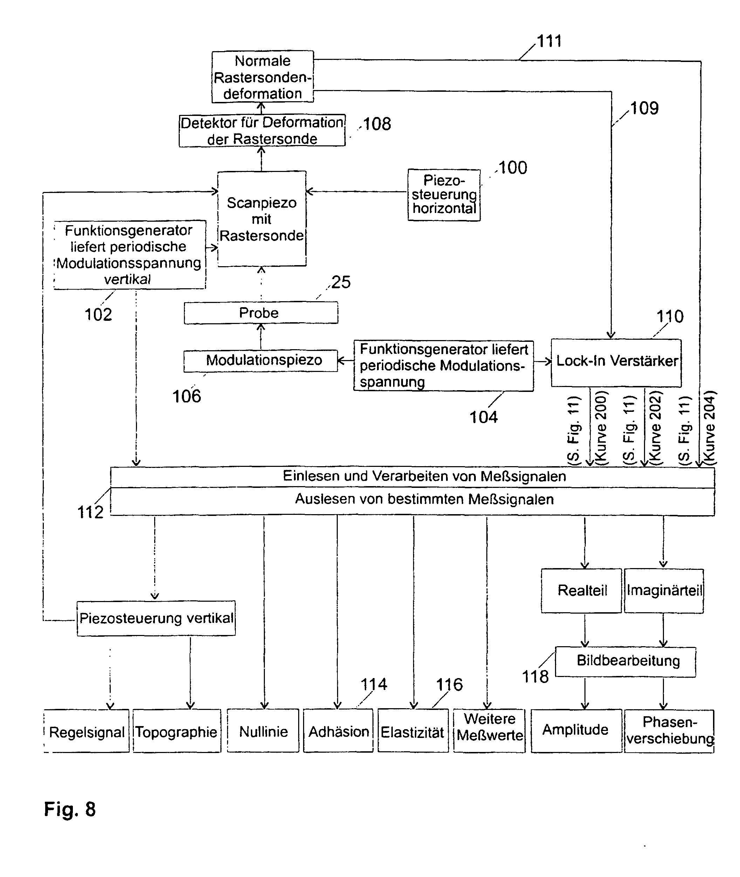

Bei einer ebenfalls möglichen Kombination Pulsed-Force-Mode/Force-Modulation, für die in Fig. 8 ein entsprechendes Ablaufdiagramm dargestellt ist, wird die Rastersonde 1 zunächst ebenfalls mit Hilfe der Steuerungseinrichtung 100 an eine vorbestimmte Probenstelle x, y verfahren. Sodann wird mit Hilfe des Funktionsgenerators 102 wiederum eine periodische Modulationsspannung generiert, die eine periodisch vertikale Bewegung der Rastersonde 1 mit einer Frequenz von zumindest 10 Hz, insbesondere jedoch 500 Hz - 2 kHz, und einer Amplitude von zumindest 1 nm, insbesondere jedoch 10 - 500 nm, zur Folge hat. Diese Schwingung wird mit einer zweiten Frequenz von zumindest 1 kHz, insbesondere 5 kHz-1 Mhz und einer zweiten Amplitude von zumindest 0,1 nm, insbesondere 1 - 10 nm moduliert. Die oben bereits erwähnte Detektoreinrichtung 108, die die vertikale Deformation der Rastersonde 1 erfaßt, liefert über die Leitung 109 im Unterschied zur obigen Verfahrensvariante das die vertikale Deformation der Rastersonde 1 charakterisierende zweite Meßsignal zur Bestimmung des Real- und Imaginärteils des Meßsignals mittels einer Fourier-Transformation.

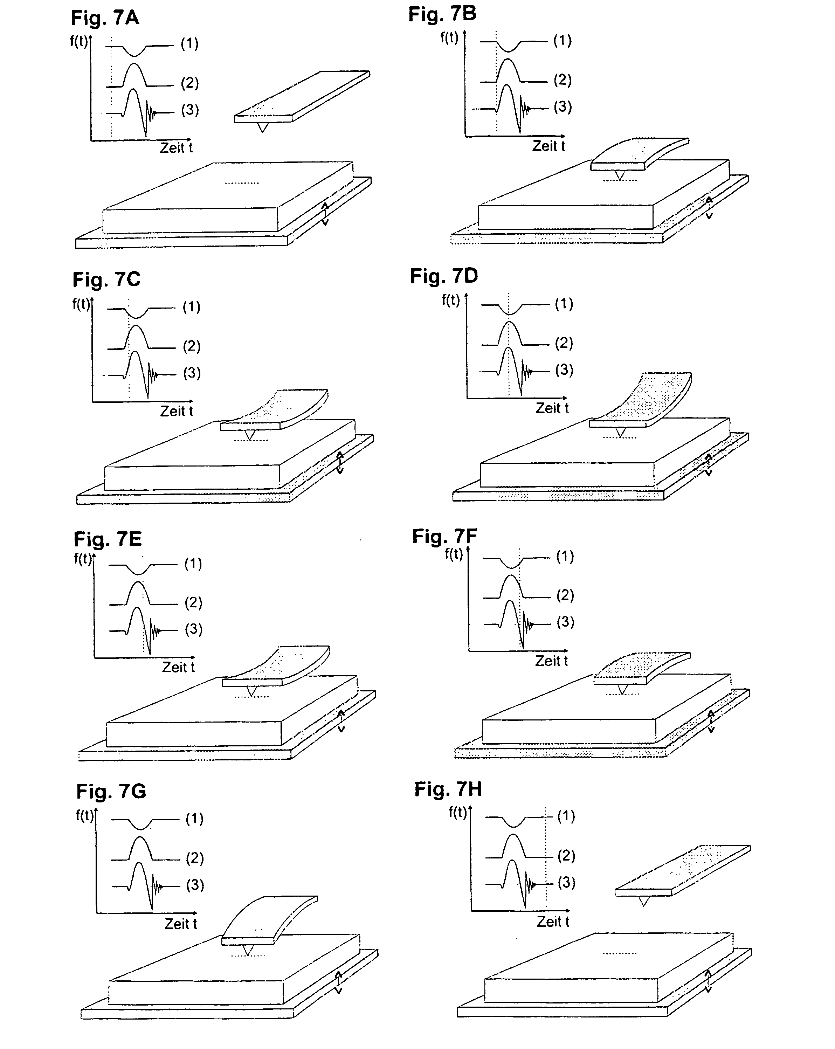

Eine zu Fig. 4 analoge Darstellung des Prinzips einer solchen Messung ist Fig. 7 zu entnehmen, wobei jedoch im Unterschied zu Fig. 4 die Probe 25 nicht lateral sondern vertikal moduliert wird. Es sei darauf hingewiesen, daß die erwähnten Verfahrensvarianten, d. h. die Kombination Pulsed-Force-Mode/Dynamische Reibung und Pulsed Force Mode/Force Modulation, auch miteinander kombinierbar sind.

Bei der oben beschriebenen Kombination Pulsed-Force-Mode/Dynamische Reibung wird aus dem Real- und Imaginärteil x bzw. y des erfaßten lateralen Kraftsignals wird mittels einer Bildbearbeitungseinrichtung 118 die Reibungsamplitude $r = (x^2 + y^2)^{1/2}$ und die Phasenverschiebung $\phi = \arctan(x/y)$ des Cantilevers 3 bezüglich der Modulationsamplitude des Scherpiezoelementes berechnet.

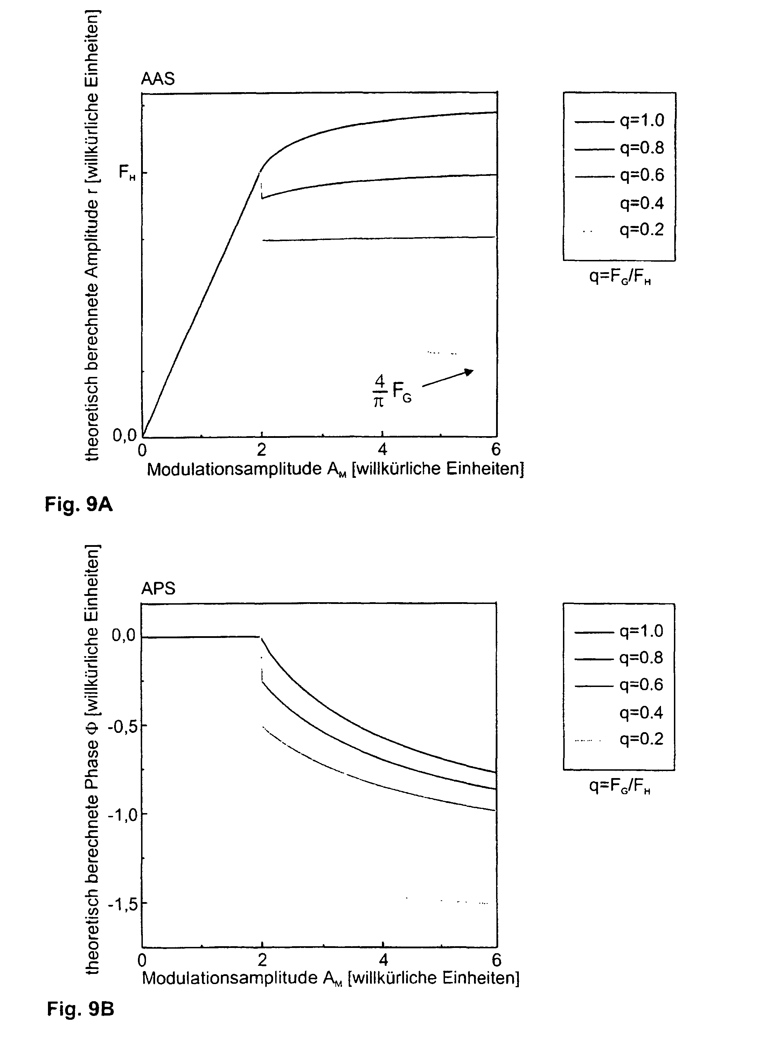

Entsprechende Abhängigkeiten sind in den Figuren 9A und 9B dargestellt.
Fig. 9A zeigt anhand der Abhängigkeit der detektierten Amplitude von der Modulationsamplitude $A_M$ ein sich ergebendes Amplituden - Amplituden-Spektrum (AAS), während die Fig. 9B ein sich ergebendes Amplituden-Phasen -Spektrum (APS) mit der Abhängigkeit der detektierten Phase von der Modulationsamplitude $A_M$ zeigt. Für sehr hohe Modulations- oder Anregungsamplituden $A_M$ gilt

$$\lim_{A_M \to \infty} r = 4 \cdot F_G / \pi.$$

Im Phasenspektrum APS ist im Gleitreibungsbereich je nach q-Faktor (q = $F_G$ / $F_H$ ) eine deutliche Phasenverschiebung zu erwarten, wobei $F_G$ die Gleitreibung und $F_H$ die Haftreibung ist.

Die Reibungskoeffizienten $\mu$ werden über $\mu = F_G$ / $F_N$ ermittelt, wobei man die Normalkraft $F_N$ aus dem kalibrierten Pulsed-Force-Mode-Meßsignal erhält, auf das geregelt wird. Analoges gilt für das APS.

Führt man dynamische Reibungsmessungen mit konstanten Modulationsamplituden $A_M$ durch, so können den qualitativen Reibungs- und Phasenkontrasten mittels AAS bzw. APS quantitative Reibungswerte und Phasenverschiebungen zugeordnet werden.

Die aufgenommenen ersten Meßsignale werden über eine Leitung 111 direkt an die Auswerteeinrichtung 112 übermittelt.

Aus den aufgenommenen Kraftsignalen werden durch die Auswerteinrichtung 112 mittels eines Mikrocomputers mit einem geeigneten Rechnerprogramm auch die Adhäsion 114 und die Elastizität 116 bestimmt.

Wurde dies für eine bestimmte XY-Stelle der Probe durchgeführt, so wird mit Hilfe der Steuerungseinrichtung 100 die Rastersonde 1 an eine andere Stelle X, Y der Probenoberfläche 30 verfahren. An dieser Stelle wird die zuvor beschriebene Messung wiederholt. Wie oben bereits beschrieben wurde, wird auf diese Art und Weise die komplette Probe 25 abgerastert, wobei man neben der Topographie ein vollständiges Bild der Adhäsion, der Reibung und der Elastizität auf der Probenoberfläche 30 erhält.

Die vertikale und/oder horizontale Modulation kann nicht nur durch ein unter der Probe 25 angebrachtes Scherpiezoelement, sondern beispielsweise auch durch ein Scanpiezoelement erzeugt werden.

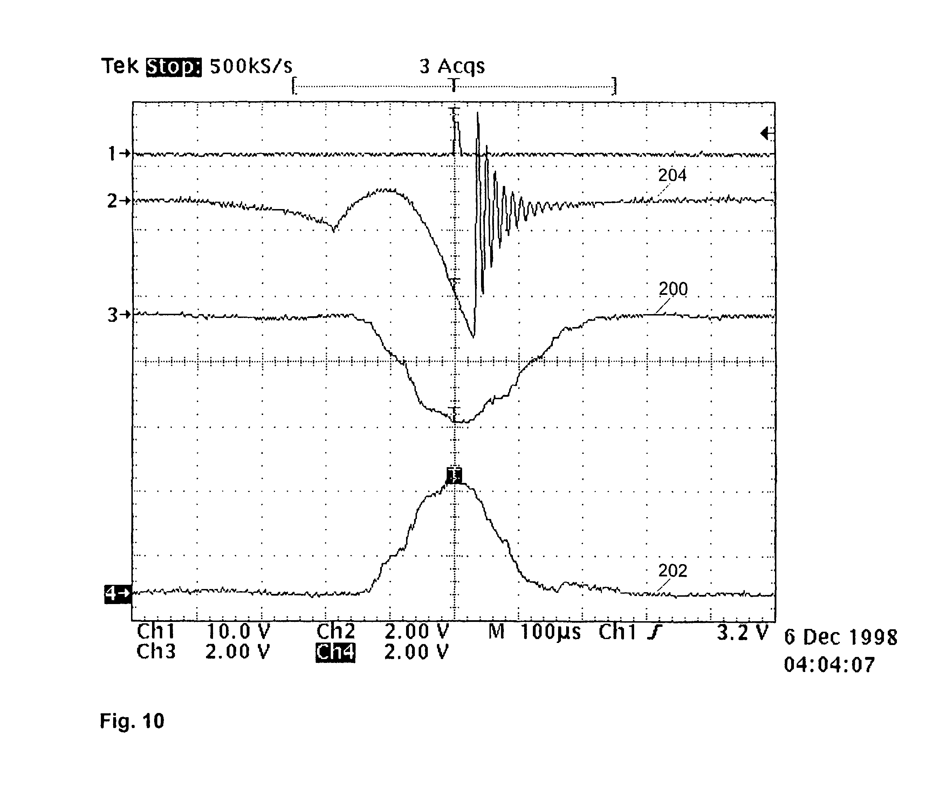

In Fig. 10 sind die an einer vorbestimmten Probenstelle detektierten Meßsignale auf Grund der lateralen und vertikalen Verbiegung und/oder Tordierung des Balkens oder Cantilevers 3 dargestellt, die mit dem erfindungsgemäßen Verfahren durch eine Kombination Pulsed Force Mode/Dynamische Reibung erhalten wurden. Nach einer elektronischen Bearbeitung und der Auslesung bestimmter charakteristischer Meßwerte lassen sich aus diesen Meßsignalen auf die beschriebene Art und Weise die gewünschten probenspezifischen Eigenschaften bestimmen. Die Kurve 200 zeigt den von dem Lock-In-Verstärker 110 ausgegebenen Realteil x eines aufgenommenen zweiten Meßsignals auf Grund der lateralen Deformation des Cantilevers, während die Kurve 202 den Imaginärteil dieses Meßsignals darstellt. Die Kurve 204 zeigt das detektierte Pulsed-Force-Meßsignal (das Meßsignal 1) auf Grund der vertikalen Verbiegung des Cantilevers 3.

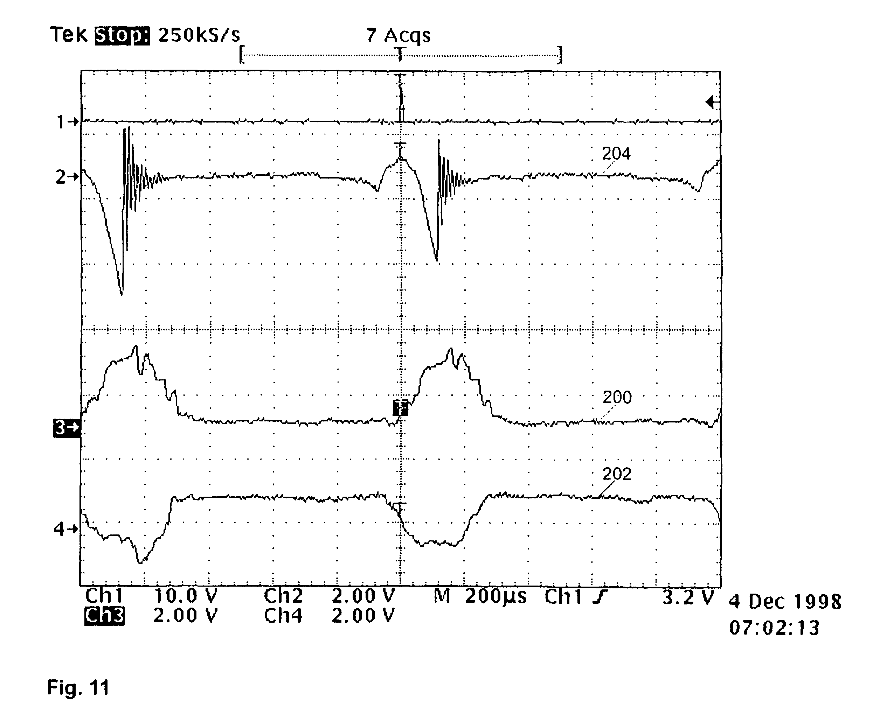

Fig. 11 zeigt eine entsprechende Darstellung für eine Kombination Pulsed Force Mode/Force Modulation.

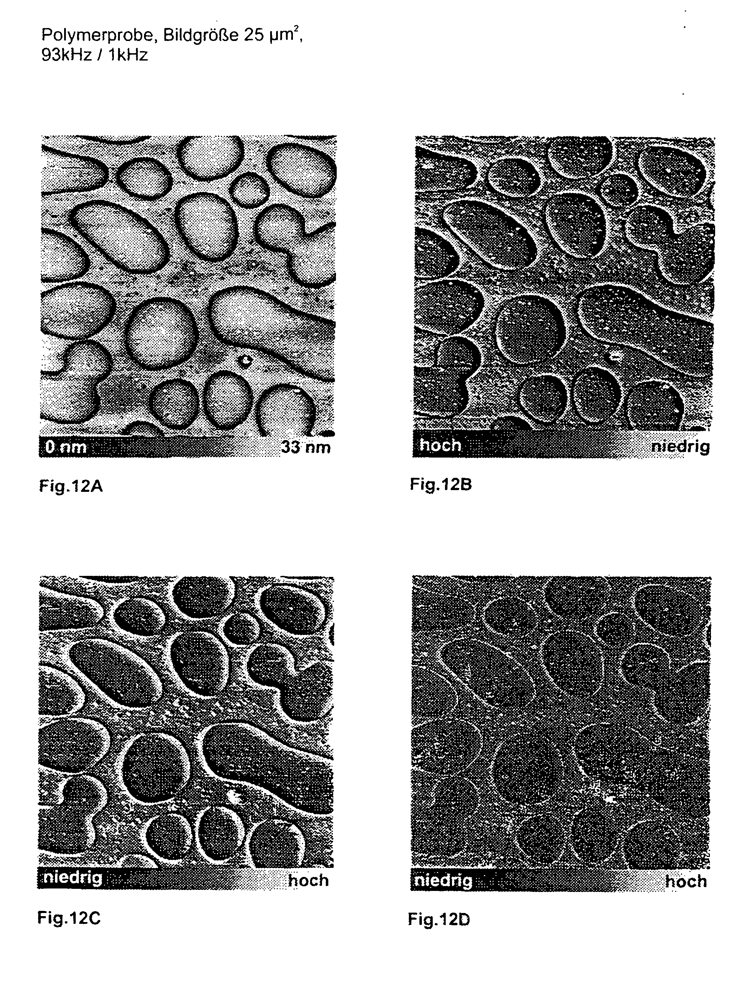

In Fig. 12 sind mit dem erfindungsgemäßen Verfahren aufgenommene Bilder einer Probenoberfläche 30 dargestellt, wobei die horizontale Anregungsfrequenz der Probe 93 kHz und die vertikale Anregungsfrequenz der Sonde 1 kHz beträgt. Fig. 12A zeigt die Probentopographie, die aus einer Kraftregelung erhalten wird, Fig. 12B die Adhäsion auf der Probenoberfläche 30 und Fig. 12C die Reibungsamplitude auf der Probenoberfläche 30. In Fig. 12D schließlich ist die Phase des Meßsignales dargestellt.

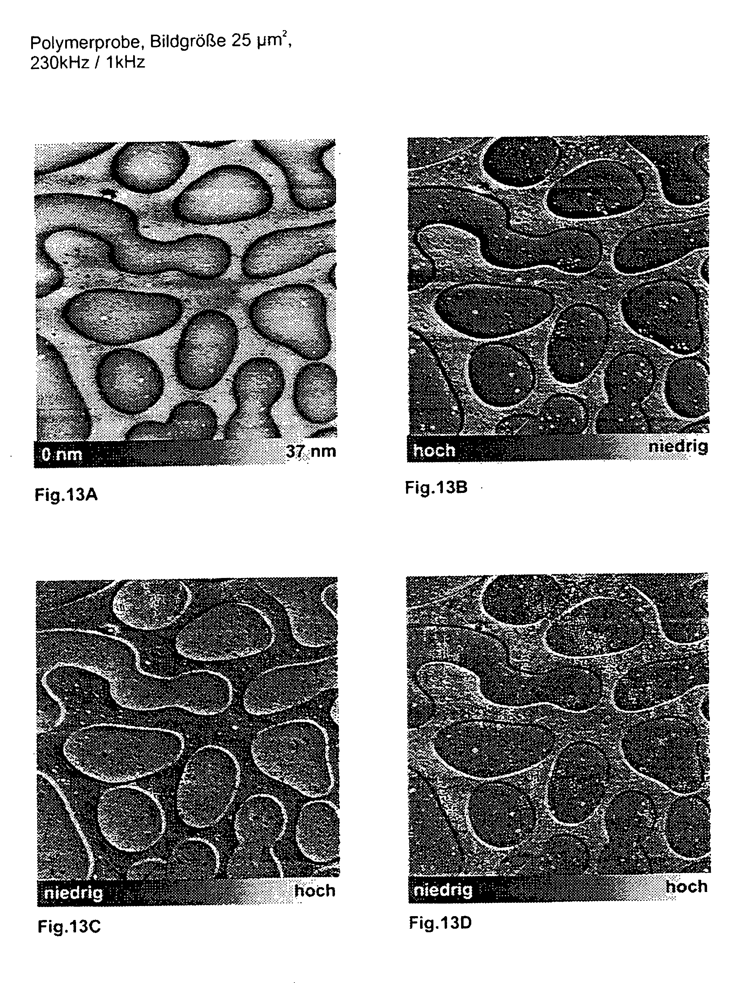

Fig. 13 zeigt eine entsprechende Darstellung für eine Kombination Pulsed Force Mode/Force Modulation, wobe die vertikale Anregungsfrequenz der Probe 230 kHz und die vertikale Anregungsfrequenz der Sonde 1 kHz beträgt.

Mit der vorliegenden Erfindung wird erstmals ein Meßverfahren zur gleichzeitigen Bestimmung der Adhäsion, der Reibung und weiterer Materialeigenschaften, insbesondere die Elastizität und Steifigkeit, und eine Vorrichtung zur Durchführung dieses Verfahrens vorgestellt, mit deren Hilfe die Abbildung gesamter Probenoberflächen im atomaren Maßstab möglich ist.

Eine Kombination Pulsed-Force-Mode/Dynamische Reibung ermöglicht hierbei insbesondere eine gleichzeitige Messung der Adhäsion, der Reibung und weiterer Materialeigenschaften, während durch eine Kombination Pulsed-Force-Mode/Force-Modulation neben der Adhäsion gleichzeitig auch noch elastische Materialeigenschaften und gegebenenfalls auch noch andere Materialeigenschaften bestimmbar sind. Eine Kombination dieser beiden Verfahrensvarianten ermöglicht sogar die gleichzeitige Messung aller genannten Materialeigenschaften.

**Patentansprüche**

1. Rastersondenmikroskop zur Untersuchung von Probenoberflächen mit:

   - einer Rastersonde (1);
   - einer Halteeinrichtung (23) für eine Probe (25) mit einer zu untersuchenden Probenoberfläche (30);
   - einer Einrichtung (106) zum Verfahren der Rastersonde (1) und/oder der Probe (25) durch die die Rastersonde (1) und/oder die Probe (25) so in Kontakt bringbar sind oder in Kontakt gebracht werden, daß sie auf bestimmte Art und Weise miteinander wechselwirken; und mit
   - einer Einrichtung zur Erfassung der Rastersonden- und/oder Probenbewegung;

   **gekennzeichnet durch**

- eine Einrichtung (100, 102, 104) zur Steuerung der Rastersonden- und/oder Probenbewegung und zur Anregung einer vertikalen ersten Rastersondenund/oder Probenschwingung sowie einer vertikalen und/oder horizontalen zweiten Rastersonden- und/oder Probenschwingung; und

- eine Einrichtung (13, 108) zur Erfassung einer vertikalen und/oder lateralen Deformation der Rastersonde (1) und zum Aufnehmen zweier die Deformation der Rastersonde (1) bei einer vertikalen ersten bzw. einer vertikalen und/oder horizontalen zweiten Schwingungsanregung der Rastersonde (1) und/oder der Probe (25) charakterisierenden Meßsignale.

2. Rastersondenmikroskop nach Anspruch 1,
**dadurch gekennzeichnet,**
**daß** die Einrichtung zum Verfahren der Rastersonde (1) und/oder der Probe (25) zumindest ein erstes Piezoelement umfaßt.

3. Rastersondenmikroskop nach Anspruch 1 oder 2,
**gekennzeichnet durch** periodische Rastersonden- und/oder Probenschwingungen.

4. Rastersondenmikroskop nach Anspruch 3,
**dadurch gekennzeichnet,**
**daß** die Schwingungsrichtung parallel oder senkrecht zur Abtast- oder Scanrichtung verläuft.

5. Rastersondenmikroskop nach Anspruch 3 oder 4,
**dadurch gekennzeichnet,**
**daß** die Vertikalschwingung der Rastersonde (1) und/oder der Probe (25) mit einer ersten Frequenz von zumindest 10 Hz und einer ersten Amplitude von zumindest 1 nm erfolgt.

6. Rastersondenmikroskop nach Anspruch 5,
**dadurch gekennzeichnet,**
**daß** die Frequenz 500 Hz - 2 kHz und die Amplitude 10 - 500 nm beträgt.

7. Rastersondenmikroskop nach Anspruch 5 oder 6,
**dadurch gekennzeichnet,**
**daß** die Vertikalschwingung der Rastersonde (1) und/oder der Probe (25) zusätzlich zumindest mit einer zweiten Frequenz von zumindest 1 kHz und einer zweiten Amplitude von zumindest 0,1 nm angeregt oder moduliert ist.

8. Rastersondenmikroskop nach Anspruch 7,
**dadurch gekennzeichnet,**
**daß** die Frequenz 5 kHz - 1 MHz und die Amplitude 1 - 10 nm beträgt.

9. Rastersondenmikroskop nach einem der Ansprüche 3 bis 8,

**dadurch gekennzeichnet,**
**daß** die zweite Rastersonden und/oder Probenschwingung eine Horizontalschwingung mit einer Frequenz von zumindest 500 Hz und einer Amplitude von zumindest 0,1 nm ist.

10. Rastersondenmikroskop nach Anspruch 7,
**dadurch gekennzeichnet,**
**daß** die Frequenz 10 - 100 kHz und die Amplitude 1 - 30 nm beträgt.

11. Rastersondenmikroskop nach einem der vorhergehenden Ansprüche,
**gekennzeichnet durch**
eine Auswerteeinrichtung (17) für die beiden Meßsignale zur gleichzeitigen Bestimmung zumindest zweier Materialeigenschaften, umfassend die Adhäsion, die statische und dynamische Reibung, die Oberflächentopographie sowie die Elastizität und Steifigkeit.

12. Rastersondenmikroskop nach Anspruch 11,
**dadurch gekennzeichnet,**
**daß** die Auswerteeinrichtung einen Lock-In-Verstärker (17) und/oder einen Mikrocomputer (112) umfaßt.

13. Rastersondenmikroskop nach einem der vorhergehenden Ansprüche,
**dadurch gekennzeichnet,**
**daß** die Rastersonde (1) eine Spitze (5) eines Kraftmikroskops und/oder eines optischen Nahfeldmikroskops ist.

14. Verfahren zur gleichzeitigen Bestimmung zumindest zweier Materialeigenschaften, umfassend die Adhäsion, die statische und dynamische Reibung, die Oberflächentopographie sowie die Elastizität und Steifigkeit einer zu untersuchenden Probenoberfläche (25), mittels eines eine Rastersonde (1) umfassenden Rastersondenmikroskops mit folgenden Verfahrensschritten:

14.1 Verfahren der Rastersonde (1) und/oder der Probe (25) mit der zu untersuchenden Probenoberfläche (30) bis die Rastersonde (1) an einer zu untersuchenden vorbestimmten Stelle (34) der Probenoberfläche (30) auf bestimmte Art und Weise mit der Probenoberfläche (30) wechselwirkt, wobei die Rastersonde (1) und/oder die Probe (25) einer vertikalen ersten Schwingung unterworfen wird;
14.2 Aufnehmen eines die Deformation der Rastersonde (1) charakterisierenden ersten Meßsignals;
14.3 Aufnehmen eines die Deformation der Rastersonde (1) charakterisierenden zweiten Meßsignals, wobei die Rastersonde (1) und/oder die Probe (25) einer horizontalen und/oder vertikalen zweiten Schwingung unterworfen wird;

14.4 Bestimmung der gewünschten Materialeigenschaften aus den beiden Meßsignalen; und

14.5 Abtasten des zu untersuchenden Bereichs der Probenoberfläche (30) durch Rückkehr zu dem Verfahrenschritt 14.1.

**15.** Verfahren nach Anspruch 14,
**dadurch gekennzeichnet,**
**daß** die Rastersonde (1) und/oder die Probe (25) zumindest einer periodischen Schwingung unterworfen wird.

**16.** Verfahren nach Anspruch 15,
**dadurch gekennzeichnet,**
**daß** die Schwingungsrichtung senkrecht oder parallel zur Abtast- oder Scanrichtung gewählt wird.

**17.** Verfahren nach einem der Ansprüche 14 bis 16
**dadurch gekennzeichnet,**
**daß** die vertikale Schwingung oder die vertikalen Schwingungen eine Frequenz von zumindest 10 Hz und eine Amplitude von zumindest 1 nm besitzen.

**18.** Verfahren nach Anspruch 17,
**dadurch gekennzeichnet,**
**daß** die Frequenz 500 Hz - 2 kHz und die Amplitude 10 - 500 nm beträgt.

**19.** Verfahren nach Anspruch 17 oder 18,
**dadurch gekennzeichnet,**
**daß** der oder den vertikalen Schwingungen zumindest eine zweite Schwingung mit einer Frequenz von zumindest 1 kHz und einer Amplitude von zumindest 0,1 nm überlagert wird.

**20.** Verfahren nach Anspruch 19,
**dadurch gekennzeichnet,**
**daß** die Frequenz 5 kHz - 1 Mhz und die Amplitude 1 - 10 nm beträgt.

**21.** Verfahren nach einem der Ansprüche 14 bis 20,
**dadurch gekennzeichnet,**
**daß** die horizontale Schwingung eine Frequenz von zumindest 500 Hz und eine Amplitude von zumindest 0,1 nm besitzt.

**22.** Verfahren nach Anspruch 21,
**dadurch gekennzeichnet,**
**daß** die Frequenz 10 - 100 kHz und die Amplitude 1 - 30 nm beträgt.

**23.** Verfahren nach einem der Ansprüche 14 bis 22,
**dadurch gekennzeichnet,**
**daß** die Rastersonde (1) mit einer bestimmten Normalkraft mit der Probenoberfläche (30) in Kontakt gebracht wird.

**24.** Verfahren nach einem der Ansprüche 14 bis 23,
**dadurch gekennzeichnet,**
**daß** zur Auswertung der Meßsignale ein Lock-In-Verstärker (17, 110) und/oder ein Mikrocomputer (112) verwendet wird.

**25.** Verfahren nach einem der Ansprüche 14 bis 24,
**dadurch gekennzeichnet,**
**daß** als Rastersonde (1) die Spitze (5) eines Kraftmikroskops und/oder eines optischen Nahfeldmikroskops verwendet wird.

**26.** Verfahren nach Anspruch 25,
**dadurch gekennzeichnet,**
**daß** die Spitze (5) des Kraftmikroskops und die Spitze des optischen Nahfeldmikroskops in einer gemeinsamen Rastersonde (1) integriert sind.

**27.** Verfahren nach einem der Ansprüche 14 bis 26,
**dadurch gekennzeichnet,**
**daß** die Rastersonde (1) und/oder die Probe (25) gleichzeitig zumindest einer vertikalen und zumindest einer horizontalen Schwingung unterworfen werden.

**Claims**

**1.** Raster probe microscope for the examination of sample surfaces with:

- a raster probe (1);
- a holding device (23) for a sample (25) with the sample surface (30) to be examined;
- an arrangement (106) for moving the raster probe (1) and/or the sample (25) by which the raster probe (1) and/or the sample (25) are bringable into contact or are brought into contact so that they interact with one another in a given manner; and with
- an arrangement for detecting the movement of the raster probe (1) and or sample (25);

**characterized by**

- an arrangement (100, 102, 104) for controlling the movement of the raster probe (1) and/or the sample (25) and for exciting a vertical first raster-probe and/or sample oscillation as well as a vertical and/or horizontal second raster-probe and/or sample oscillation; and
- an arrangement (13, 108) for detecting a vertical and/or a lateral deformation of the raster probe (1) and for the recording of two measuring signals characterizing the deformation of the raster probe (1) in a vertical first or a vertical and/or horizontal second oscillation excitation of the raster probe (1) and/or the sample (25).

2.  Raster probe microscope according to claim 1, **characterized in that** the arrangement (106) for moving the raster probe (1) and/or the sample (25) comprises at least one first piezo element.

3.  Raster probe microscope according to claim 1 or 2, **characterized by** periodic raster-probe and/or sample oscillations.

4.  Raster probe microscope according to claim 3, **characterized in that** the oscillation direction runs parallel or perpendicular to the sensing (Abtast-) or scanning direction.

5.  Raster probe microscope according to claim 3 or 4, **characterized in that** the vertical oscillation of the raster probe (1) and/or the sample (25) occurs with a first frequency of at least 10 Hz and a first amplitude of at least 1 nm.

6.  Raster probe microscope according to claim 5, **characterized in that** the frequency amounts to 500 Hz to 2 kHz and the amplitude to 10 to 500 nm.

7.  Raster probe microscope according to claim 5 or 6, **characterized in that** the vertical oscillation of the raster probe (1) and/or the sample (25) is additionally excited or modulated with a second frequency of at least 1 kHz and a second amplitude of at least 0,1 nm.

8.  Raster probe microscope according to claim 7, **characterized in that** the frequency ranges from 5 kHz to 1 Mhz and the amplitude from 1 to 10 nm.

9.  Raster probe microscope according to one of claims 3 to 8, **characterized in that** the second raster-probe and/or sample oscillation is a horizontal oscillation with a frequency of at least 500 Hz and an amplitude of at least 0,1 nm.

10. Raster probe microscope according to claim 7, **characterized in that** the frequency ranges from 10 to 100 khz and the amplitude from 1 to 30 nm.

11. Raster probe microscope according to one of the preceding claims, **characterized by** an evaluating arrangement (17) for the two measuring signals for the simultaneous determination of at least two material properties, comprising the adhesion, the static and dynamic friction, the surface topography as well as the elasticity and rigidity.

12. Raster probe microscope according to claim 11, **characterized in that** the evaluating arrangement comprises a lock-in amplifier (17) and/or a microcomputer (112).

13. Raster probe microscope according to one of the preceding claims, **characterized in that** the raster probe (1) is a point or tip (5) of a force microscope and/or of an optical near-field microscope.

14. Process forr the simultaneous determination of at least two material properties, comprising the adhesion, the static and dynamic friction, the surface topography as well as the elasticity and rigidity of the surface (30) of a sample (25) to be examined, by means of a raster probe microscope comprising a raster probe (1) with the following process steps:

    14.1 Moving the raster probe (1) and/or the sample (25) with the sample surface (30) to be examined until the raster probe (1) at a pre-determined point (34) ot the sample surface (30) to be examined, interacts in a determined manner with the sample surface (30), wherein the raster probe (1) and/or the sample (25) is subjected to a vertical first oscillation:
    14.2 Recording of a first measuring signal **characterizing** the deformation of the raster probe (1);
    14.3 Recording of a second measuring signal **characterizing** the deformation of the raster probe (1), in which the raster probe (1) and/or the sample (25) is subjected to a horizontal and/or vertical second oscillation.
    14.4 Determination of the desired material properties from the measuring signals; and
    14.5 Scanning of the region of the sample surface (30) to be examined by a return to the process Stepp 14.1.

15. Process according to claim 14, **characterized in that** the raster probe (1) and/or the sample (25) is subjected to at least one periodic oscillation.

16. Process according to claim 15, **characterized in that** the oscillation direction is chosen perpendicular to or parallel to the sensing or scanning direction.

17. Process according to one of the claims 14 to 16, **characterized in that**

the vertical oscillation or the vertical oscillations has/have a frequency of at least 10 Hz and an amplitude of at least 1 nm.

18. Process according to claim 17, **characterized in that** the frequency ranges from 500 Hz to 2 khz and the amplitude from 10 to 500 nm.

19. Process according to claim 17 or 18, **characterized in that** on the vertical oscillation (or oscillations) there is superimposed at least one second oscillation with a frequency of at least 1 kHz and an amplitude of at least 0,1 nm.

20. Process according to claim 19, **characterized in that** the frequency ranges from 5 kHz to 1 MHz and the amplitude from 1 to 10 nm.

21. Process according to one of claims 14 to 20, **characterized in that** the horizontal oscillation has a frequency of at least 500 Hz and an amplitude of at least 0,1 nm.

22. Process according to claim 21, **characterized in that** the frequency ranges from 10 to 100 khz and the amplitude from 1 to 30 nm.

23. Process according to one of claims 14 to 22, **characterized in that** the raster probe (1) is brought into contact with the sample surface (30) with a determined normal or perpendicular force.

24. Process according to one of claims 14 to 23, **characterized in that** for the evaluation of the measuring signals there is used a lock-in amplifier (17, 110) and/or a microcomputer (112).

25. Process according to one of claims 14 to 24, **characterized in that** as raster probe (1) there is used the point or tip (5) of a force microscope and/or of an optical near-field microscope.

26. Process according to claim 25, **characterized in that** the point or tip (5) of the force microscope and the point or tip (5) of the optical near-field microscope are integrated in a common raster probe (1).

27. Process according to one of claims 14 to 26, **characterized in that** the raster probe (1) and/or the sample (25) are subjected simultaneously at least to a vertical and at least to a horizontal oscillation.

**Revendications**

1. Microscope à sonde à balayage destiné à examiner les surfaces d'échantillons, comprenant :

   - une sonde à balayage (1) ;
   - un dispositif de maintien (23) pour un échantillon (25) avec une surface d'échantillon (30) à examiner ;
   - un dispositif (106) destiné à déplacer la sonde à balayage (1) et/ou l'échantillon (25) avec lequel la sonde à balayage (1) et/ou l'échantillon (25) peuvent être amenés en contact ou sont amenés en contact de telle sorte qu'ils interagissent ensemble d'une certaine manière ; et comprenant
   - un dispositif pour détecter le mouvement de la sonde à balayage et/ou de l'échantillon ;

   **caractérisé par**

   - un dispositif (100, 102, 104) pour commander le mouvement de la sonde à balayage et/ou de l'échantillon et pour initier une première oscillation verticale de la sonde à balayage et/ou de l'échantillon ainsi qu'une deuxième oscillation verticale et/ou horizontale de la sonde à balayage et/ou de l'échantillon ; et
   - un dispositif (13, 108) pour détecter une déformation verticale et/ou latérale de la sonde à balayage (1) et pour enregistrer deux signaux de mesure qui **caractérisent** la déformation de la sonde à balayage (1) dans le cas d'une première excitation d'oscillation verticale ou d'une deuxième excitation d'oscillation verticale et/ou horizontale de la sonde à balayage (1) et/ou de l'échantillon (25).

2. Microscope à sonde à balayage selon la revendication 1, **caractérisé en ce que** le dispositif destiné à déplacer de la sonde à balayage (1) et/ou l'échantillon (25) comprend au moins un premier élément piézoélectrique.

3. Microscope à sonde à balayage selon la revendication 1 ou 2, **caractérisé par** des oscillations périodiques de la sonde à balayage et/ou de l'échantillon.

4. Microscope à sonde à balayage selon la revendication 3, **caractérisé en ce que** le sens de l'oscillation est parallèle ou perpendiculaire au sens de palpage ou de balayage.

**5.** Microscope à sonde à balayage selon la revendication 3 ou 4, **caractérisé en ce que** l'oscillation verticale de la sonde à balayage (1) et/ou de l'échantillon (25) s'effectue à une première fréquence d'au moins 10 Hz et une première amplitude d'au moins 1 nm.

**6.** Microscope à sonde à balayage selon la revendication 5, **caractérisé en ce que** la fréquence est comprise entre 500 Hz et 2 kHz et l'amplitude entre 10 et 500 nm.

**7.** Microscope à sonde à balayage selon la revendication 5 ou 6, **caractérisé en ce que** l'oscillation verticale de la sonde à balayage (1) et/ou de l'échantillon (25) est au moins en plus excitée ou modulée avec une deuxième fréquence d'au moins 1 kHz et une deuxième amplitude d'au moins 0,1 nm.

**8.** Microscope à sonde à balayage selon la revendication 7, **caractérisé en ce que** la fréquence est comprise entre 5 kHz et 1 MHz et l'amplitude entre 1 et 10 nm.

**9.** Microscope à sonde à balayage selon l'une des revendications 3 à 8, **caractérisé en ce que** la deuxième oscillation de la sonde à balayage et/ou de l'échantillon est une oscillation horizontale à une fréquence d'au moins 500 Hz et une amplitude d'au moins 0,1 nm.

**10.** Microscope à sonde à balayage selon la revendication 7, **caractérisé en ce que** la fréquence est comprise entre 10 et 100 kHz et l'amplitude entre 1 et 30 nm.

**11.** Microscope à sonde à balayage selon l'une des revendications précédentes, **caractérisé par** un dispositif d'analyse (17) des deux signaux de mesure destiné à déterminer simultanément au moins deux caractéristiques du matériau, comprenant l'adhérence, le frottement statique et dynamique, la topographie de surface ainsi que l'élasticité et la rigidité.

**12.** Microscope à sonde à balayage selon la revendication 11, **caractérisé en ce que** le dispositif d'analyse comprend un amplificateur à verrouillage (17) et/ou un micro-ordinateur (112).

**13.** Microscope à sonde à balayage selon l'une des revendications précédentes, **caractérisé en ce que** la sonde à balayage (1) est une pointe (5) d'un microscope dynamométrique et/ou d'un microscope optique à champ proche.

**14.** Procédé pour déterminer simultanément au moins deux caractéristiques du matériau, comprenant l'adhérence, le frottement statique et dynamique, la topographie de surface ainsi que l'élasticité et la rigidité d'une surface d'échantillon (25) à examiner au moyen d'un microscope à sonde à balayage comprenant une sonde à balayage (1) avec les étapes suivantes :

14.1 Déplacement de la sonde à balayage (1) et/ou de l'échantillon (25) avec la surface d'échantillon (30) à examiner jusqu'à ce que la sonde à balayage (1) interagisse d'une manière définie avec la surface d'échantillon (30) à un endroit prédéfini (34) à examiner, la sonde à balayage (1) et/ou l'échantillon (25) étant soumis à une première oscillation verticale ;

14.2 Enregistrement d'un premier signal de mesure qui **caractérise** la déformation de la sonde à balayage (1) ;

14.3 Enregistrement d'un deuxième signal de mesure qui **caractérise** la déformation de la sonde à balayage (1), la sonde à balayage (1) et/ou l'échantillon (25) étant soumis à une deuxième oscillation horizontale et/ou verticale ;

14.4 Détermination des caractéristiques souhaitées du matériau à partir des deux signaux de mesure ; et

14.5 Palpage de la zone à examiner de la surface d'échantillon (30) en retournant à l'étape 14.1 du procédé.

**15.** Procédé selon la revendication 14, **caractérisé en ce que** la sonde à balayage (1) et/ou l'échantillon (25) est soumis (e) à au moins une oscillation périodique.

**16.** Procédé selon la revendication 15, **caractérisé en ce que** le sens de l'oscillation est choisi perpendiculairement ou parallèlement au sens de palpage ou de balayage.

**17.** Procédé selon l'une quelconque des revendications 14 à 16, **caractérisé en ce que** l'oscillation verticale ou les oscillations verticales possède(nt) une fréquence d'au moins 10 Hz et une amplitude d'au moins 1 nm.

**18.** Procédé selon la revendication 17, **caractérisé en ce que** la fréquence est comprise entre 500 Hz et 2 kHz et l'amplitude entre 10 et 500 nm.

**19.** Procédé selon la revendication 17 ou 18, **caractérisé en ce qu'**une deuxième oscillation ayant une fréquence d'au moins 1 kHz et une amplitude d'au moins 0,1 nm est superposée à la ou aux oscillations verticales.

**20.** Procédé selon la revendication 19, **caractérisé en ce que** la fréquence est comprise entre 5 kHz et 1 MHz et l'amplitude entre 1 et 10 nm.

21. Procédé selon l'une quelconque des revendications 14 à 20, **caractérisé en ce que** l'oscillation horizontale possède une fréquence d'au moins 500 Hz et une amplitude d'au moins 0,1 nm.

22. Procédé selon la revendication 21, **caractérisé en ce que** la fréquence est comprise entre 10 et 100 kHz et l'amplitude entre 1 et 30 nm.

23. Procédé selon l'une quelconque des revendications 14 à 22, **caractérisé en ce que** la sonde à balayage (1) est amenée en contact avec la surface d'échantillon (30) avec une force normale donnée.

24. Procédé selon l'une quelconque des revendications 14 à 23, **caractérisé en ce qu'**un amplificateur à verrouillage (17, 110) et/ou un micro-ordinateur (112) est utilisé pour analyser les signaux de mesure.

25. Procédé selon l'une quelconque des revendications 14 à 24, **caractérisé en ce que** la sonde à balayage (1) utilisée est la pointe (5) d'un microscope dynamométrique et/ou d'un microscope optique à champ proche.

26. Procédé selon la revendication 25, **caractérisé en ce que** la pointe (5) du microscope dynamométrique et la pointe du microscope optique à champ proche sont intégrées dans une sonde à balayage (1) commune.

27. Procédé selon l'une quelconque des revendications 14 à 26, **caractérisé en ce que** la sonde à balayage (1) et/ou l'échantillon (25) est soumis(e) simultanément à au moins une oscillation verticale et au moins une oscillation horizontale.

Fig. 1

Fig. 2

Fig. 3A

Fig. 3B

Fig. 4A

Fig. 4B

Fig. 4C

Fig. 4D

Fig. 4E

Fig. 4F

Fig. 4G

Fig. 4H

**Fig. 5**

111

Normale Rastersonden-deformation

Laterale Rastersonden-deformation

Detektor für Deformation der Rastersonde  ⟋108

109

Piezo-steuerung horizontal  ⟋100

Scanpiezo mit Rastersonde

Funktionsgenerator liefert periodische Modulationsspannung vertikal

102

25

Probe

Modulationspiezo

Funktionsgenerator liefert periodische Modulations-spannung

104

110

Lock-In Verstärker

106

(S. Fig. 10) (Kurve 200)  (S. Fig. 10) (Kurve 202)  (S. Fig. 10) (Kurve 204)

Einlesen und Verarbeiten von Meßsignalen

Auslesen von bestimmten Meßsignalen

112

Realteil  Imaginärteil

Piezosteuerung vertikal

Bildbearbeitung

118

114  116

Regelsignal  Topographie  Nullinie  Adhäsion  Elastizität  Weitere Meßwerte  Reibungs-amplitude  Phasen-verschiebung

Fig. 6

Fig. 7A

f(t)

(1)

(2)

(3)

Zeit t

Fig. 7B

f(t)

(1)

(2)

(3)

Zeit t

Fig. 7C

f(t)

(1)

(2)

(3)

Zeit t

Fig. 7D

f(t)

(1)

(2)

(3)

Zeit t

Fig. 7E

f(t)

(1)

(2)

(3)

Zeit t

Fig. 7F

f(t)

(1)

(2)

(3)

Zeit t

Fig. 7G

f(t)

(1)

(2)

(3)

Zeit t

Fig. 7H

f(t)

(1)

(2)

(3)

Zeit t

**Fig. 8**

**Fig. 9A**

**Fig. 9B**

Fig. 10

Fig. 11

Polymerprobe, Bildgröße 25 µm$^2$,
93kHz / 1kHz

Fig.12A

Fig.12B

Fig.12C

Fig.12D

Polymerprobe, Bildgröße 25 µm$^2$,
230kHz / 1kHz

0 nm · · · · · · · · · · · · · · · · · · · · · · · · · · · · · · · · 37 nm

Fig.13A

hoch · · · · · · · · · · · · · · · · · · · · · · · · · · · · · · niedrig

Fig.13B

niedrig · · · · · · · · · · · · · · · · · · · · · · · · · · · · · · hoch

Fig.13C

niedrig · · · · · · · · · · · · · · · · · · · · · · · · · · · · · · hoch

Fig.13D